# EUROPEAN PATENT APPLICATION

(11) **EP 1 104 816 A1**
(43) Date of publication of application: **06.06.2001**
(21) Application number: 00935529.8
(22) Date of filing: 02.06.2000
(51) Int. Cl.: C22C 38/00, C22C 38/06, C22C 38/58

(54) **HIGH-TENSION STEEL MATERIAL WITH EXCELLENT SUITABILITY FOR WELDING WITH HIGH-ENERGY-DENSITY HEAT SOURCE AND WELDED STRUCTURE THEREOF**

(30) Priority: 04.06.1999 JP 15865899
(71) Applicant: Kawasaki Steel Corporation, Kobe-shi, Hyogo 651-0075 (JP)
(72) Inventor: KAWABATA, Fumimaru, Kawasaki Steel Corporation, Kurashiki-shi, Okayama 712-8074 (JP); AMANO, Keniti, Kawasaki Steel Corporation, Kurashiki-shi, Okayama 712-8074 (JP)
(74) Representative: Grünecker, Kinkeldey, Stockmair & Schwanhäusser Anwaltssozietät
(86) International application number: JP0003593
(87) International publication number: WO0075388

(57) **Abstract**

The present invention relates to a steel material, which has excellent welding properties suitable for welding by the high energy density heat source, and to a welded structure thereof

Specifically, the steel material and a welding heat-affected zone (and optionally a weld metal) thereof contain, by mass%: 0.0050-0.025% (inclusive of both 0.0050% and 0.025%) or preferably 0.0050-0.020% (inclusive of 0.0050% and exclusive of 0.020%) of C in the ultra low carbon range; 0.1-0.5% of Si (inclusive of both 0.1% and 0.5%); 2.5% or less of Mn; 0.003% or less of S; 0.05% or less of Al; 0.0003-0.0040% (inclusive of both 0.0003% and 0.0040%) or preferably 0.0010-0.0025% (exclusive of 0.0010% and inclusive of 0.0025%) of B; 0.0035% or less of N; at least one element selected from the group consisting of Cu, Ni, Cr, Mo, Nb, V and Ti; and Ca and/or REM, wherein the steel material is a structure which contains, by presence ratio, 90% or more of ultra low carbon bainite and 5% or less of carbides.

## Description

### Technical Field

The present invention relates to a high tensile strength steel material for welding structures which is suitable for ships, tanks, pipelines and the like. The present invention specifically relates to a steel material which has excellent welding properties (weldability) suitable for welding by a high energy density heat source such as laser beam welding and electron beam welding (such weldability suitable for welding by a high energy density-heat source will be referred to as "high energy density heat source weldability" herein after). The present invention also specifically relates to welding structures using the same steel material. The steel material of the present invention includes steel pipes, steel plates and steel sections.

### Background Art

In recent years, heat working technique using laser beam, which is one of the high energy density heat sources, has been remarkably developed. Laser output is steadily increasing as a result of the improvement of optical systems and the enhanced reliability of control devices. In particular, in the application of laser beam to the laser welding in which the laser beam can be focused by a metal mirror, the maximum output available for use reaches several tens of kW, which suffices for penetrating welding a thick steel plate having thickness of several tens of mm. In addition, YAG laser having high outputs has been commercially available, recently, although carbon dioxide laser was conventionally used as the main high output laser. The YAG laser is now more and more widely used as a laser welding device, because of the excellent flexibility thereof in beam transfer.

Conventionally, such a specific welding method as described above has been used for specific steel materials having extremely high strength in which processing by the standard arc welding method is difficult due to occurrence of weld cracking hydrogen.

The electron beam which is one of the high energy density heat sources is also now widening the application range thereof in use, as compared with the state in the past, due to the progress of the partial vacuum technique. In recent years, application of the electron beam welding to a pipeline constructing method is being studied, so as to achieve highly efficient construction of line pipes using common practical steel of relatively low strength.

As welding by the high energy density heat source causes melting in an extremely localized manner, the welding is performed as welding having a relatively large depth of penetration as compared with the conventional arc welding (the deep penetration welding). Therefore, welding by the high energy density heat source is what is called "small heat input welding" in which the penetrating welding is easy and the amount of heat to be inputted per plate thickness is significantly smaller than that of the conventional arc welding. In short, the welding by the high energy density heat source is the small heat input welding per plate thickness. However, the welding by the high energy density heat source, being different from the small heat input welding by the conventional arc welding as a multilayer welding, forms a welded zone in which a weld metal (in what is called the "as weld" state) and a welding heat-affected zone (which will be referred to as "HAZ" hereinafter) coexist and which does not experience the tempering by subsequent passes. Due to this, there arises a problem that the welded zone, at which the cooling rate is relatively high, is subjected to significant hardening and thus the toughness of the welded zone tends to deteriorate.

In order to solve the problem as described above, in JP-A 62-64486 Laid-Open, for example, there is proposed a technique in which the hardening of the welded zone in the super low heat input welding by electron beams is suppressed by increasing the amount of oxygen in steel and decreasing the degree of hardenability of the steel. However, an increase in the amount of oxygen in the steel may significantly deteriorate the toughness of the base material in some cases. In addition, in this case, if the welding is performed by a means other than electron beam, the hardenability of the welded zone may rather deteriorate too much, so as to cause softening of the welded zone. Further, JP-A 62-64486 does not consider at all the toughness of the HAZ, to which properties the present invention is directed.

Further, in order to solve the problems as described above, in a case of a steel material which is produced with a preposition of being subjected to heat treatment (quenching-tempering) and whose yield strength exceeds 588 MPa (=60kgf/mm²), for example, it may be possible to improve the toughness of the high energy density welded zone at which the cooling rate is relatively high, because the hardenability of the welded zone thereof can be adjusted without causing any conflict with properties of the base material. Specifically, in JP-A 2-282446 Laid-Open, a high tensile strength steel which is excellent in the electron beam welding properties, whose yield strength is 588 MPa (=60kgf/mm²) grade or higher and whose tensile strength is about 686 MPa (≈70kgf/mm²) or higher is proposed. JP-A 2-282446 points out the deterioration of toughness due to the upper bainite structure (it is known that this structure is generated in carbon steel), and discloses that the toughness of the electron beam welded zone can be remarkably enhanced by adjusting the hardenability of the steel plate such that the lower bainite (different from the upper bainite) or a mixed structure of the lower bainite and martensite is easily generated.

However, it should be noted that in JP-A 2-282446 the base material is limited to a high strength steel whose yield strength is 60kgf/mm² or higher and whose mechanical proparties can be maintained due to the lower bainite or the mixed structure of the lower bainite and martensite. In addition, in JP-A 2-282446, the toughness of the HAZ, to which the present invention is directed, is hardly considered. On the other hand, the conventional steel for practical use, to which the present invention is directed, whose yield strength is less than 588 MPa (=60kgf/mm²) and whose tensile strength is less than about 686 MPa (≈70kgf/mm²), is produced in most cases in the rolled state by using air-cooling or accelerated cooling, and therefore is designed so as to have hardenability suitable for such production processes. In such conventional steel for practical use when the steel is subjected to a rapid cooling in which the cooling rate exceeds the predetermined (designed) cooling rate, as in the welding by high energy density heat source, hard martensite, and the upper bainite which contains significant amounts of coarsed carbides and island-like martensite and thus significantly deteriorates the toughness of the steel, tends to be formed. There has not yet been proposed any invention which can prevent such significant hardening and deterioration of the toughness of the welded zone.

### SUMMARY OF THE INVENTION

The present invention aims at solving the aforementioned problems of the prior art, and has an object of providing a high tensile strength steel material, which is excellent in the high energy density heat source welding properties, whose tensile strength is in the range of 490 to 700 or so MPa (inclusive of 490) and suitable for welding in which high energy density heat source such laser beam or electron beam is utilized.

The inventors of the present invention, as a result of assiduous studies, in order to improve the high energy density heat source welding properties, discovered that it is important that a steel material has stable hardenability, without experiencing excessive hardening of the weld metal and HAZ thereof, in a relatively wide range of the cooling rate (ranging from a super high cooling rate to a relatively low cooling rate).

In addition, the inventors discovered that a steel material which does not harden even at the super high cooling rate is obtained by: reducing the C (carbon) content to an ultra low carbon range of 0.025 mass% or less; adding B (boron) as an essential element; and reducing the S (sulfur) content to 0.003 mass% or less and the N (nitrogen) content to 0.0035 mass% or less, wherein the structures of the base material, the weld metal and the HAZ are each mainly in the ultra low carbon bainite phase in which extremely small amounts of carbides are contained. The inventors also discovered that, in such a steel material, not only the properties of the base material but also the toughness of the welded zone produced by the welding by the high energy density heat source, the toughness of the HAZ in particular, is improved and thus the weld crack thereof is suppressed. In other words, the inventors discovered that the toughness of the welded zone can be improved by controlling the structure of the weld metal and the HAZ so as not to be changed, as compared with that of the base material, after being welded by the high energy heat source.

The present invention has been completed by further studying and supplementing the aforementioned discoveries.

Specifically, the present invention can be summarized by following features (1)-(7).
(1) A high tensile strength steel material which is excellent weldability in high energy density heat source, comprising, by mass%: 0.0050-0.025% (inclusive of both 0.0050% and 0.025%) or preferably 0.0050-0.020% (inclusive of 0.0050% and exclusive of 0.020%) of C; 0.1-0.5% of Si (inclusive of both 0.1% and 0.5%); 2.5% or less of Mn; 0.003% or less of S; 0.05% or less of Al; 0.0003-0.0040% (inclusive of both 0.0003% and 0.0040%) or preferably 0.0010-0.0025% (exclusive of 0.0010% and inclusive of 0.0025%) of B; 0.0035% or less of N; and the balance of Fe and unavoidable impurities which are inevitably mixed into the composition, wherein the high tensile strength steel material has a structure which contains, by presence ratio, 90% or more of ultra low carbon bainite and 5% or less of carbides.
(2) A high tensile strength steel material which is excellent weldability in high energy density heat source of (1), wherein the high tensile strength steel material further comprises, by mass%, in addition to the aforementioned composition, at least one element selected from the group consisting of: 0.05-2.0% (inclusive of both 0.05% and 2.0%) of Cu; 0.05-3.0% (inclusive of both 0.05% and 3.0%) of Ni; 1.0% or less of Cr; 1.0% or less of Mo; 0.08% or less of Nb; 0.08% or less of V; 0.1% or less of Ti.
(3) A high tensile strength steel material which is excellent weldability in high energy density heat source of (1) or (2), wherein the high tensile strength steel material further comprises, by mass%, in addition to the aforementioned composition at least one element selected from a group consisting of:, 0.0005-0.0040% (inclusive of both 0.0005% and 0.0040%) of Ca, 0.0020-0.0080% (inclusive of both 0.0020% and 0.0080%) of REM.
(4) A welded structure in which the high tensile strength steel material described in any of (1) to (3) is used and welded by high energy density heat source.
(5) A welded structure of (4), wherein the high energy density heat source is electron beam.
(6) A welded structure in which the high tensile strength steel material described in any of (1) to (3) is used and welded by the high energy density heat source, comprising:, a weld metal and a HAZ each contain, by mass%: 0.0050-0.025% (inclusive of both 0.0050% and 0.025%) or preferably 0.0050-0.020% (inclusive of 0.0050% and exclusive of 0.020%) of C; 0.1-0.5% of Si (inclusive of both 0.1% and 0.5%); 2.5% or less of Mn; 0.003% or less of S; 0.05% or less of Al; 0.0003-0.0040% (inclusive of both 0.0003% and 0.0040%) or preferably 0.0010-0.0025% (exclusive of 0.0010% and inclusive of 0.0025%) of B; 0.0035% or less of N; optionally, at least one element selected from a group consisting of, by mass%: 0.05-2.0% (inclusive of both 0.05% and 2.0%) of Cu; 0.05-3.0% (inclusive of both 0.05% and 3.0%) of Ni; 1.0% or less of Cr; 1.0% or less of Mo; 0.08% or less of Nb; 0.08% or less of V; 0.1% or less of 15; further optionally, by mass%, at least one element selected from 0.0005-0.0040% (inclusive of both 0.0005% and 0.0040%) of Ca, 0.0020-0.0080% (inclusive of both 0.0020% and 0.0080%) of REM; the balance of Fe and unavoidable impurities which are inevitably mixed into the composition, wherein the high tensile strength steel material has a structure which contains, by presence ratio, 90% or more of ultra low carbon bainite and 5% or less of carbides.
(7) A welded structure of (6), wherein a tensile strength (TS) of a base material of the welded structure is 490 MPa or more, a fracture appearance transition temperature thereof is -110°C or less and an absorbed energy (vE₋₃₀) of a weld metal and a HAZ is 250J or more.

The welded structure of the present invention represents a structure which includes a base material and a welded zone in an integrated manner, and may be a member or a finished product. In addition, the presence ratio of the ultra low carbon bainite and carbides of the present invention represents the average value of area ratio obtained as a result of observations by an optical microscope or a scanning electron microscope.

### The preferred Embodiment of the Present Invention

First, the reason for limiting the structure of a steel material of the present invention will be described hereinafter.

The steel material of the present invention has a structure in the ultra low carbon bainite phase. In the present invention, the structure of a base material and the structure of a welded zone have the ultra low carbon bainite, independent of the cooling rate thereof. In the present invention, the "ultra low carbon bainite" represents quasi-polygonal α (α_{q}), granular Zw-α (α_{B}), bainitic ferrite (α°_{B}) and a mixed structure thereof. It should be noted that α_{q}, α_{B}, α°_{B} represent the same structures as described in page 8, Table 1 of "(Goku)Teitansoko no Beinaito Soshiki to Hentaikyodo ni kansuru Saikin no Kenkyu" (Recent Research concerning Bainitic Structure and Transformation Behavior of (Ultra) Low Carbon Steel) as the final report by Bainite research/study group of Nippon Tekko Kyokai Kiso Kyodo Kenkyukai (Corporation), issued on July 30, 1994.

The content of ultra low carbon bainite contained in the steel material of the present invention is, by presence ratio, 90% or more. When the ultra low carbon bainite content is less than 90%, ferrite is generated and thus the strength of the base material deteriorates, or coarse upper bainite containing carbides and/or island-like martensite is generated thereby deteriorating the toughness of the base material and the HAZ. Therefore, in the present invention, the content of the ultra low carbon bainite is limited to 90% or more.

In addition, the content of carbides contained in the steel material of the present invention is, by presence ratio, 5% or less. When the carbide content exceeds 5%, the toughness of the welding heat-affected zone deteriorates. Due to this, the content of carbides in the present invention is limited to 5% or less. The toughness of the steel material is deteriorated, not only by the toughness of the ultra low carbon bainite of the base structure, but also by the influence of the hard phase contained in the steel material. The island-like martensite is one typical example of the hard phase. The larger the difference in hardness between the base structure and the hard phase is, the more significantly the hard phase affects the toughness properties of the steel material. As the steel material of the present invention contains no less than 90% of the ultra low carbon bainite (the present steel material is quite different from the conventional steel material in this feature) and is substantially a single-phase structure steel, the steel is susceptible to the influence by the base structure and the carbides of the hard phase, as compared with the conventional steel. Accordingly, it is necessary that the amount of carbides of the hard phase is restricted in order to achieve an excellent toughness properties of the present steel. It should be noted that phases other than the ultra low carbon bainite and carbides do not have, if these phases are present at the presence ratio of less than 10%, particularly strong adverse effects, because these phases are not as hard as the carbides. For example, the present steel may contain less than 10% of the structures such as granular/needle-like ferrite, pearlite, upper bainite, lower bainite, martensite, which are often observed in the conventional steel. It should be noted, however, that the content of the island-like martensite is preferably 6% or less.

Next, the reason for limiting the chemical compositions of the steel material of the present invention will be described hereinafter.
C: 0.0050-0.025%

C is an important element which determines the structures of the base material, the weld metal and the HAZ of the steel material. When the content of solid-solved C is reduced, the intergranular strength is decreased and intergranular fracture is likely to occur, thereby deteriorating the toughness properties. Thus, the content of C must be 0.0050% or more. In addition, in the present invention, the content of C is preferably 0.025% or less (i.e., ultra low carbon) in order to keep the base material, the weld metal and the HAZ altogether in the equilibrated state so as to prevent generation of cementite (one of the carbides), and to suppress generation of hard martensite, which deteriorates the toughness properties, in the welding by the high energy density heat source. By setting the content of C at 0.025% or less of ultra low carbon level and adding appropriate alloy elements, the ultra low carbon bainite structure can be obtained, independent of the cooling rate. That is, a steel material having relatively high strength, whose tensile strength is 490 MPa or more, can be obtained. Further, by reducing the C content to the ultra low carbon level, the structure of the weld metal of the welded zone and the structure of the HAZ, resulted from the high energy density heat source welding, can be made to be the ultra low carbon bainite which contains an extremely small amount of carbides. As a result, the toughness of the welded zone, resulted from the high energy density heat source welding, can be significantly improved. The carbon content of the present invention is preferably 0.020% or less.
Si; 0.1-0.5%

Si is an essential element which serves as a deoxidizing element during the refining process. The content of Si is preferably 0.1% or more, in order to act sufficiently as the deoxidizing element. As Si is a ferrite-forming element, when the Si content exceeds 0.5%, the ultra low carbon bainite structure is likely to become the granular ferrite (polygonal ferrite (αₚ)), thereby resulting in lower strength and significant deterioration of toughness of the base material. Due to this, the Si content is restricted to 0.5% or less in the present invention. The Si content is preferably 0.30% or less.
Mn: 2.5% or less

Mn is an element which significantly affects the continuous cooling transformation behavior of the steel material in the ultra low carbon range. In order to obtain the ultra low carbon bainite structure in which the lath (the internal structure of the bainite) formed therein has fine size and of which toughness properties are excellent, the Mn content is preferably 0.5% or more. However, when the Mn content exceed 2.5%, structures having poor toughness such as island-like martensite are generated, although the whole content of C is reduced. Due to this, the Mn content is restricted to 2.5% or less in the present invention. The Mn content is preferably 0.8-1.8% in terms of the strength and toughness.
S: 0.003% or less

The weld crack during welding (the solidification cracking, in particular) must be suppressed in welding by the high energy density heat source, as is in other cases. In the welding by the high energy density heat source, no filler metal is used except for some specific cases. Therefore, the weld metal in the welding by the high energy density heat source has substantially the same composition as that of the base material. As a result, in order to prevent occurrence of solidification cracking during welding by the high energy density heat source, it is necessary that the base material has a composition in which no solidification crack is likely to occur. S is an element which forms sulfides and thus deteriorates ductility and solidification crack resistance properties. Due to this, the content of S of the base material is to be reduced as much as possible. As the liquid phase temperature is close to the solid phase temperature and thus the solidification crack is more likely to occur under the ultra low carbon condition, reducing the content of S is important. When the S content exceeds 0.003%, the welding solidification crack frequently occurs during welding by the high energy density heat source. Therefore, the S content is restricted to 0.003% or less in the present invention. The S content is preferably 0.001% or less.
Al: 0.05% or less

Al acts as an deoxidizing agent. However, when Al is added too much, the concentration of Al₂O₃ in the inclusions increases and large-size cluster inclusions may be generated. Therefore, the content of Al is 0.05% or less in the present invention.
B: 0.0003-0.0040%

B is an element which enhances hardenability and thus is one of the important elements in the present invention. B suppresses generation of the soft ferrite which is produced when the cooling rate is relatively small and the coarse needle-like ferrite which is produced in the HAZ or the welded zone of electron beam welding when the cooling rate is relatively high. Accordingly, B is effectively used for reliably obtaining the ultra low carbon bainite which has uniform and fine structures. In order that the structure of the steel material be the ultra low carbon bainite which is excellent in toughness, the content of B must be at least 0.0003% or more. However, when the content of B exceeds 0.0040%, Fe-B based precipitates are generated and the effect of increasing the strength of the steel material will not be obtained any more. Due to this, the content of B is restricted to the range of 0.0003-0.0040%. The content of B is preferably 0.0010-0.0025% (exclusive of 0.0010% and inclusive of 0.0025%).
N: 0.0035% or less

N is reacted with B so as to form BN, thereby decreasing the effective B content. In addition, N becomes solid-solved N, facilitates generation of micro hard phase such as island-like martensite due to the stabilization of austenite, and thus deteriorates the toughness. In order to generate fine ultra low carbon bainite having excellent toughness properties, it is necessary that generation of the ferrite which is likely to be intergranularly generated and generation of the coarse upper bainite is suppressed. Due to this, it is essential that B is made to act most effectively. Accordingly, the content of N is reduced as much as possible in the present invention. However, reducing the content of N to an ultra low level is likely to increase the production cost. Therefore, the acceptable upper limit of the N content is set at 0.0035% in the present invention.

At least one selected from a group consisting of Cu: 0.05-2.0%, Ni: 0.05-3.0%, Cr: 1.0% or less, Mo: 1.0% or less, Nb: 0.08% or less, V: 0.08% or less, Ti: 0.1% or less.

All of Cu, Ni, Cr, Mo, Nb, V, Ti are elements which increase the strength of the steel material, and may be contained according to necessity. The reasons for limiting the contents of these elements are described below.
Cu: 0.05-2.0%

Cu has effects of increasing the strength of the steel and adjusting the bainite transformation temperature. In order that the structure of the steel material be the ultra low carbon bainite which is excellent in toughness properties, the content of Cu is preferably 0.05% or more. However, when the content of Cu exceeds 2.0%, the concentration of the solid-solved C in the matrix is decreased, thereby facilitating the formation of the island-like martensite, increasing hardness and deteriorating the toughness properties. Due to this, the content of Cu is preferably restricted to 0.05-2.0%.
Ni: 0.05-3.0%

Ni has effects of increasing the strength of the steel and adjusting the bainite transformation temperature, in a manner similar to Cu. In order that the structure of the steel material be the ultra low carbon bainite which is excellent in toughness properties, the content of Ni is preferably 0.05% or more. However, when the content of Ni exceeds 3.0%, the concentration of the solid-solved C in the matrix is decreased, thereby facilitating the formation of the island-like martensite and deteriorating the toughness properties. Due to this, the content of Ni is preferably restricted to the range of 0.05-3.0%.
Cr: 1.0% or less

Cr is an element which increases the strength of the steel. However, when the content of Cr exceeds 1.0%, the effect of increasing strength reaches the plateau and the toughness of the steel material rather deteriorate. Thus, the content of Cr is preferably 1.0% or less. More preferably, the content of Cr is 0.1-0.8%.
Mo: 1.0% or less

Mo is an element which increases the strength of the steel. However, when the content of Mo exceeds 1.0%, the effect of increasing strength reaches the plateau and the toughness of the steel material rather deteriorate. Thus, the content of Mo is preferably 1.0% or less. More preferably, the content of Mo is 0.1-0.8%.
V: 0.08% or less

V is an element which is solid-solved or forms carbides and nitrides so as to increase the strength of the steel, and may be contained in the steel material according to necessity. However, when the content of V exceeds 0.08%, ferrite is likely to be formed. Accordingly, the content of V is preferably 0.08% or less.
Nb: 0.08% or less

Nb is an element which is important for facilitating accumulation of plastic strain of austenite in the rolling process of the steel material and thus for facilitating increase in strength of the steeL In order to obtain such an effect, the content of Nb is preferably 0.01% or more. However, when the content of Nb exceeds 0.08%, carbides are formed and thus the inter granular strength, as well as the toughness properties, are deteriorated. Thus, the content of Nb is preferably restricted to 0.08% or less. It should be noted that the content of Nb is more preferably 0.010-0.05% in terms of the strength and the toughness properties of the base material and the toughness properties of the weld metal and the HAZ.
Ti: 0.1% or less

Ti has effects similar to those of Nb. However, Ti is more strongly bound to N, facilitates the effective use of B and thus increases the strength of the steeL In addition, Ti is precipitated as TiN and thus has an effect of suppressing the grain growth at a relatively high temperature. In order to obtain such an effect, the content of Ti is preferably 0.005% or more. However, when the content of Ti exceeds 0.1%, the intergranular strength is decreased and the toughness properties are reduced. Due to this, the content of Ti is preferably restricted to 0.1% or less. It should be noted that the content of Ti is more preferably 0.005-0.08% in terms of securing the appropriate amount of solid-solved B. Ti also acts as a deoxidizing agent In order to make Ti act sufficiently as an deoxidizing agent, the content of Ti is preferably 0.025% or more.

At least one selected from a group consisting of Ca: 0.0005-0.0040%, REM: 0.0020-0.0080%

Both Ca and REM have an effect of suppressing grain growth in the HAZ. At least one selected from a group consisting of Ca, REM may be contained in the steel according to necessity.

Both Ca and REM form inclusions (deposits) and have an effect of suppressing grain growth. Such an effect is observed when the content of Ca is 0.0005% or more and the content of REM is 0.0020% or more. However, when the content of Ca exceeds 0.0040% or the content of REM exceeds 0.0080%, the inclusions are generated too much and cluster-like inclusions, which rather acts as the starting point of fracture, are formed, thereby adversely affecting the toughness properties. Thus, it is preferable that the content of Ca is restricted to 0.0005-0.0040% and the content of REM is restricted to 0.0020-0.0080%.

The balance other than the aforementioned components includes Fe and unavoidable impurities. The impurities may include: 0.0050% or less of P; and 0.035% or less of O.

Next, a preferred method of producing the steel material of the present invention will be described hereinafter.

A molten steel having the aforementioned composition is produced by melting, by applying the conventional known melt-production methods such as a converter, an electric furnace and a vacuum melting furnace.

The molten steel is then cast into a rolled base material such as slub by utilizing the conventional known casting methods such as the continuous casting process, the ingot casting and the like.

It is preferable that the rolled base material is reheated to a temperature in the range between the Ac₃ transformation point and 1250°C or is subjected to the hot rolling process without being reheated, so as to be formed to a steel material such as a thick steel plate, a steel pipe, a steel section and the like.

Next, the preferable conditions for the hot rolling process will be described.

When the heating temperature is below the Ac₃ transformation point, austenitizing is not fully completed and the effect of grain refining by the rolling process cannot be obtained at a sufficient level. On the other hand, when the heating temperature exceeds 1250°C, the austenite grains are significantly made larger and the structures obtained after rolling become coarse, thereby deteriorating the toughness properties. Thus, the heating temperature is preferably restricted to the range between the Ac₃ transformation point and 1250°C. The heating temperature is more preferably 1050-1150°C.

The accumulative amount of reduction in the temperature range of no higher than 980°C: 50% or more

When the amount of reduction in the temperature range of no higher than 980° C (i.e., in the unrecrystallized gamma phase temperature region) is increased, the size of bainite which has been transformed from the austenite grain is made fine and the toughness properties of the bainite structure is improved. In addition, when the amount of reduction in the unrecrystallized gamma phase temperature region is increased, the austenite grains are made to extend and the dislocation density accumulated in the austenite grains is increased. Accordingly, during the transformation a part of dislocation is taken over by the bainite structure after the transformation and the strength of the steel is further enhanced. Such an effect is distinctively achieved in accordance with the accumulative amount of reduction, when the accumulative amount of reduction is 50% or more in the temperature range of no higher than 980°C. Thus, the accumulative amount of reduction in the temperature range of no higher than 980°C is preferably 50% or more.

Hot rolling process finishing temperature: 700°C or more

As the hot rolling process finishing temperature decreases, the rate at which the strain (dislocation) introduced into the austenite grains by the rolling process is accumulated in the grains is increased, and thus the amount of dislocation taken over by the structure after the transformation is significantly increased. Accordingly, the strength of the steel material is enhanced. When the hot rolling process finishing temperature is below 700°C, the increase in strength reaches the plateau stage, the resistance against deformation increases and the rolling efficiency is deteriorated. Thus, the rolling process finishing temperature is preferably 700°C or more in the present invention.

In the present invention, the hot rolling process may be followed by the air-cooling process and optionally by the accelerated cooling process. By carrying out the accelerated cooling after the hot rolling process, the bainite structure formed therein is made fine and thus the toughness properties of the steel are still more improved.

The cooling rate in the accelerated cooling conditions is not particularly limited, but is preferably 0.01-50°C/s. The cooling-stop temperature is preferably 600°C or lower.

When the cooling rate is less than 0.01°C/s, it becomes difficult to be the grains fine because of the recover/growth of the structure, and the effect of the accelerated cooling is decreased. On the other hand, achieving the cooling rate which exceeds 50°C/s is difficult in the industrial terms. Thus, the cooling rate of the accelerated cooling is preferably in the range of 0.01-50°C/s.

Further, when the cooling-stop temperature exceeds 600°C, the recover/growth occurs during the air-cooling period thereafter. As a result, the effect of the accelerated cooling is decreased and the effect of improving the toughness properties are also decreased. Thus, the cooling-stop temperature is preferably 600°C or less in the present invention.

A welded structure having a desired shape can be produced by welding the high tensile strength steel material described above by using the high energy density heat source. The welding by the high energy density heat source includes welding by laser beam or electron beam and plasma welding. The present invention can be applied to any of such welding methods by using the high energy density heat source. When high toughness is required, in particular, in the weld metal in the aforementioned welding methods, the present invention includes adjusting the composition of the weld metal by using a filler metal. Examples of the welded structures include pipelines, ships, tanks and the like.

### Examples

Next, the effect of the present invention will be described according to following examples.

### Example 1

Steels having compositions shown in Table 1 were melt-produced in a converter and then cast into slubs having thickness of 310 mm. Then, the slubs were heated to 1120°C and the hot rolling process was carried out against these slubs, such that the accumulative amount of reduction in the temperature range of no higher than 980°C was 50% or more and the hot rolling process finishing temperature was in the range of 750-850°C. The slubs were air-cooled after the hot rolling process, to obtain steel plates having thickness of 25 mm in the rolled state. With respect to some of the steel plates (Steel material No. 32 and No. 33), the accelerated cooling was performed after the hot rolling processing. The accelerated cooling was started at the cooling start temperature of 750°C and continued until the temperature reached 500°C at the cooling rate of 12°C/s.

With respect to the obtained steel plate, an analysis on the structures of the base material, a tensile test and a Charpy impact test were carried out to analyze the properties of the base material. A JIS No. 4 testing piece was used in the tensile test. A JIS No. 4 testing piece was used in the Charpy impact test.

In the analysis on the structures of the base material, observation was carried out by using an optical microscope and a scanning electron microscope (SEM) so as to obtain the presence ratios of the carbides content and the structure. With respect to the structure, at least 5 fields were observed by the optical microscope (×400); for each field, the area ratios of the granular ferrite, pearlite, the upper bainite, the lower bainite, martensite were measured, and the area ratio of the ultra low carbon bainite phase of α_{q}, α_{B} and α°_{B} was obtained as the rest of the aforementioned area ratios; and the presence ratio of the ultra low carbon bainite phase was obtained as the average value of the area ratios of the ultra low carbon bainite of the observed fields. With respect to the carbides, the electrolytic two-stage etching was carried out, SEM photos (×1000) were taken at random for five fields, the area ratio was obtained with respect to each filed, and the average value of the observed fields was calculated as the presence ratio of the carbides.

Further, welded joints were produced from the obtained steel plates by the electron beam welding (output: 15kW). Testing pieces were collected from these welding joints and the presence/absence of weld crack therein was observed. The toughness properties (the Charpy absorption energy vE₋₃₀ (J) at the testing temperature of -30°C) of the weld metal (collected from the center portion of the weld metal portion) and the welded bond (collected such that the notch was positioned at the melt line) were analyzed by a Charpy impact test using JIS No. 4 testing pieces. In addition, the HAZ structures were analyzed in a manner similar to that employed for the base material. The electron beam welding in the present example was carried out as laterally-penetrating welding.

The results of the tests described above are shown in Table 2.

The results of the present examples all show the tensile strength of 490 Mpa or more of the base material, as well as the excellent toughness properties at a relatively low temperature in which the fracture appearance transition temperature is -110°C or less. In addition, in the present example, no weld crack was observed in the electron beam welded zone and the toughness properties of the weld metal and the HAZ are excellent (vE₋₃₀ is 250J or more), indicating that the steel material of the present invention exhibits excellent welding properties when welding is performed by the high energy density heat source. That is, form the results shown in Table 2, it is understood that the steel material of the present invention exhibits excellent weldability in high energy density heat sources welding.

On the other hand, in the comparative examples which are beyond the range of the present invention, the tensile strength of the base material are below 490 Mpa in some cases and the toughness properties at a relatively low temperature also deteriorate. In addition, in some comparative examples, the structures of the weld metal and the HAZ became hardened structures (such as martensite, the upper bainite) or rather soft structures (due to precipitates of ferrite), failing to obtain stable toughness properties at the welded zone. Further, some comparative examples show generation of welding solidification cracking, indicating deterioration of the welding properties.

### Example 2

By using a steel composition shown in steel No. 11 of Table 1, a thick steel plate having plate thickness of 16 mm was produced in the substantially same manner as Example 1. Using this thick steel plate, steel pipes having outer diameter of 660 mm were produced by the UOE producing method. Sets of two steel pipes were welded cicrumferentially by the electron beam welding without using any filler-solved metal, to obtain steel pipe welded joints. With respect to the welded zone of these steel pipe welded joints, the presencelabsence of weld crack (solidification cracking) was analyzed by using supersonic. No cracking was observed. In addition, Charpy impact testing pieces (JIS No. 4 testing pieces) were collected from the welded zone, and the toughness properties of the weld metal (collected from the center portion of the weld metal portion) and the weld bond (collected such that the notch was positioned at the melt line) were analyzed, respectively. Both the weld metal and the HAZ exhibited excellent toughness properties in which vE₋₃₀ was 350J or more.

### Industrial Applicability of the Present Invention

According to the present invention, high tensile strength steel-welded structures, which does not experience solidification cracking when welding is performed by using the high energy density heat sources such as laser beam, electron beam or the like and whose weld metal and HAZ have excellent toughness properties, can be produced. According to the present invention, the highly efficient welding of high quality is reliably made possible, thereby achieving a significantly excellent effect in industrial terms.

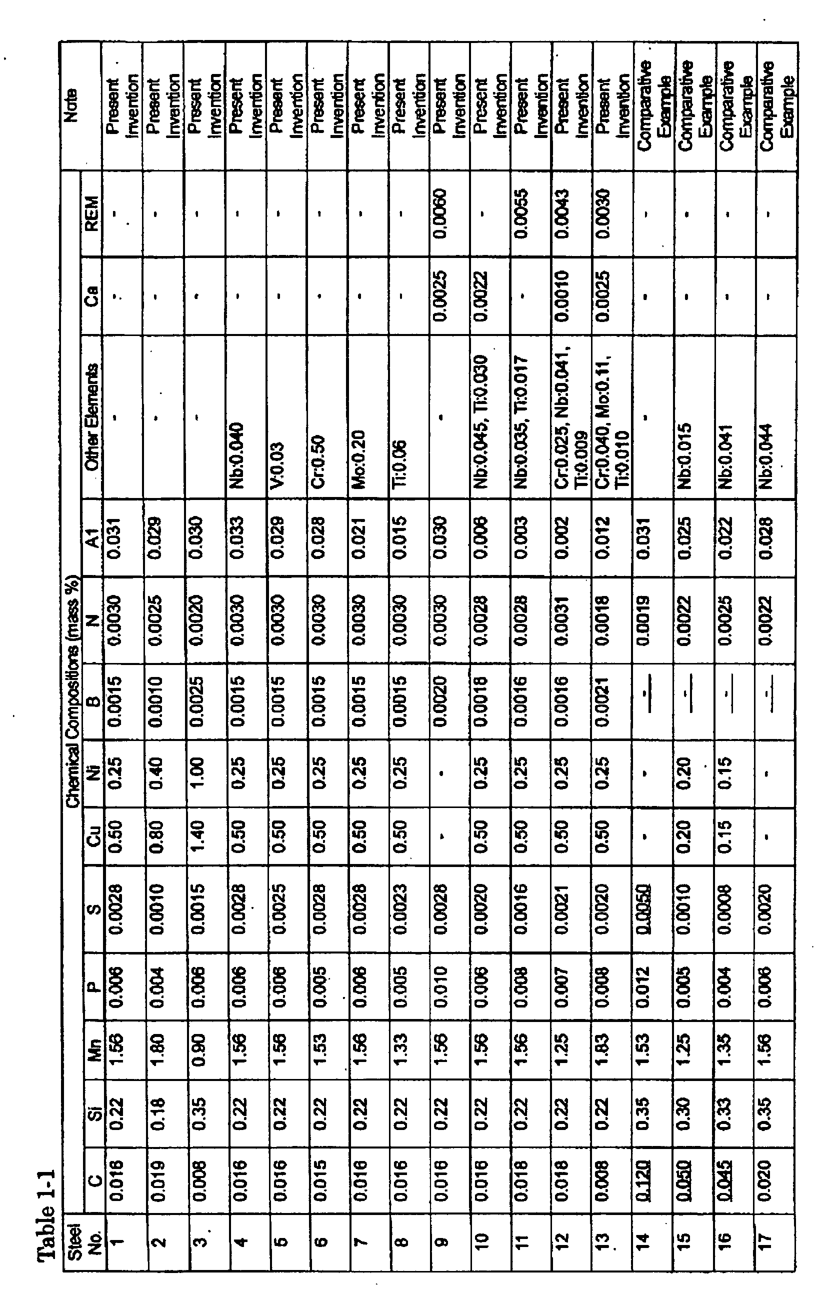

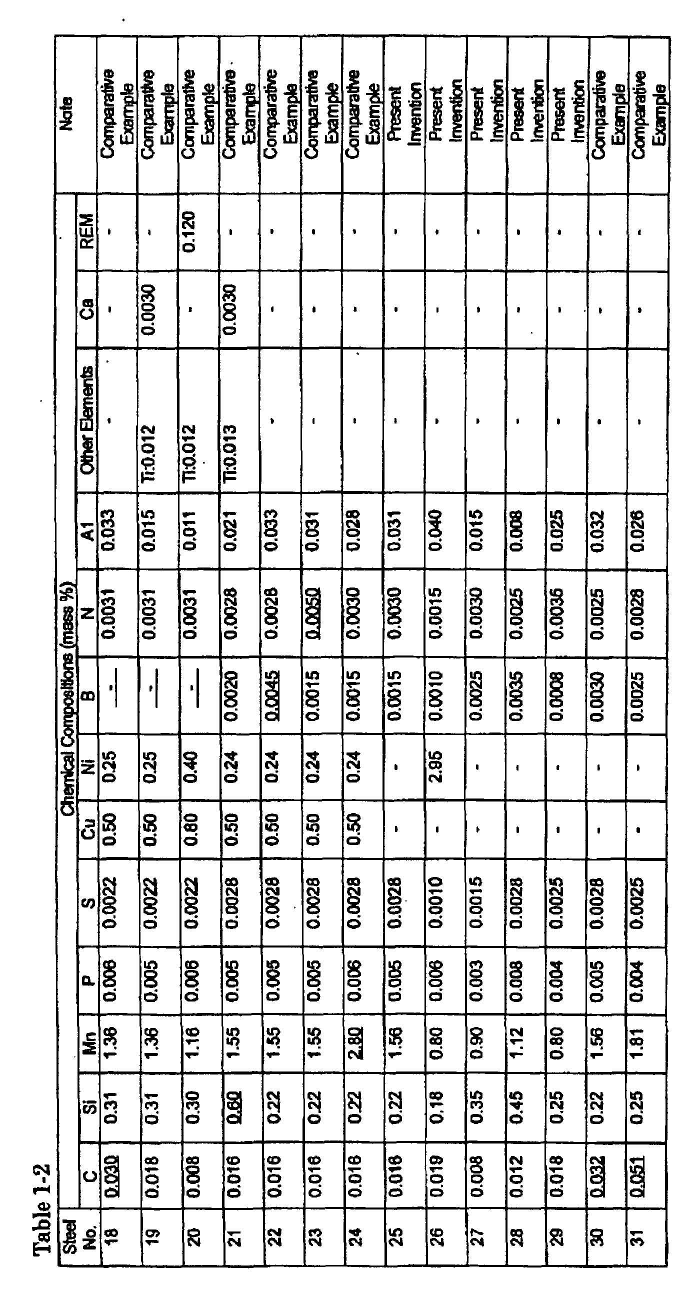

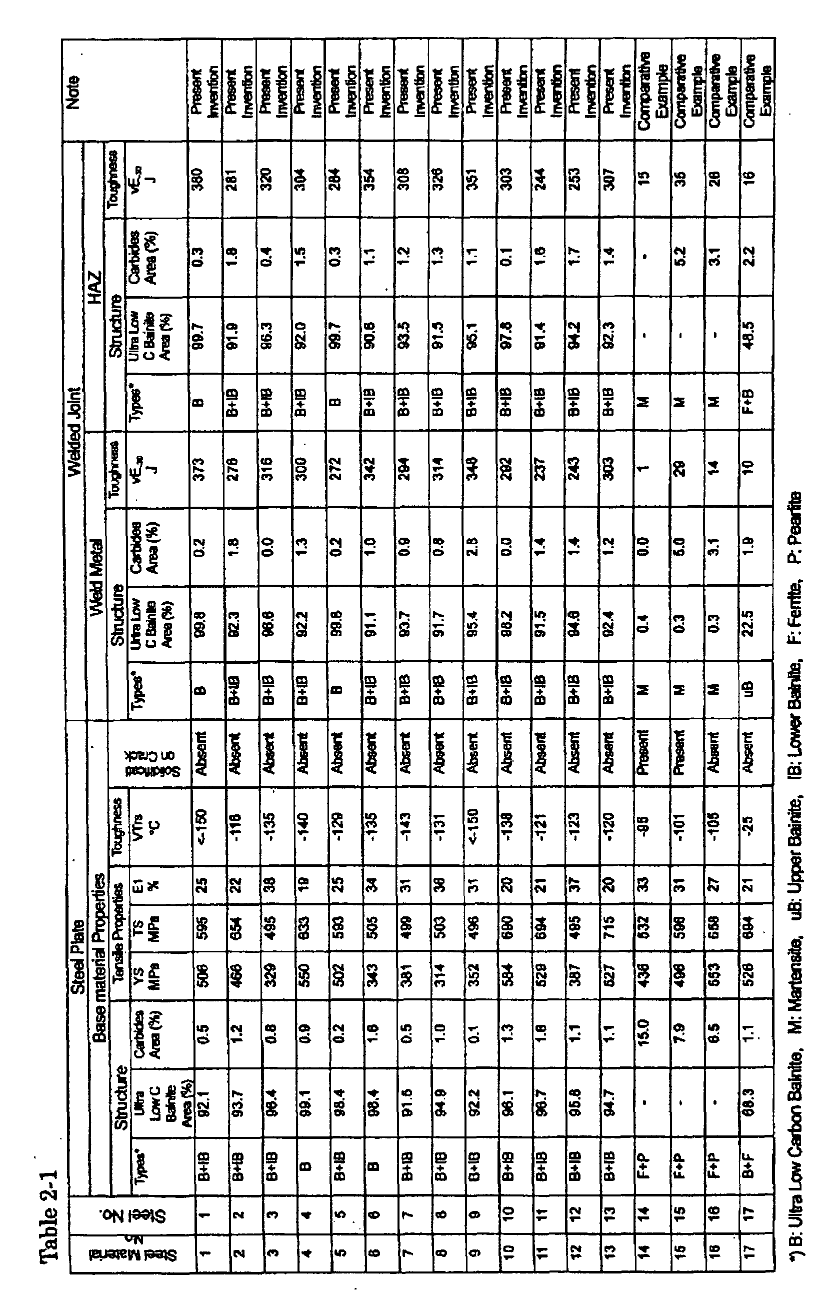

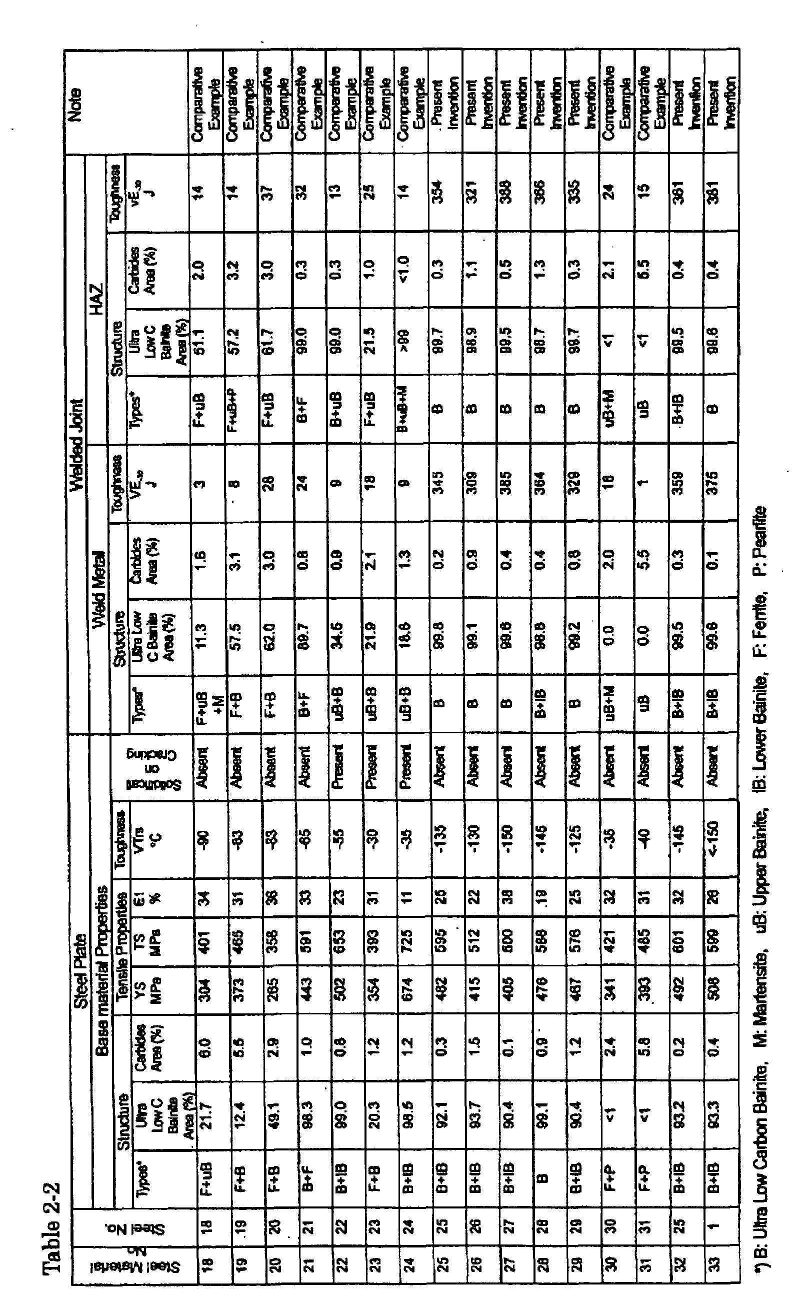

## Claims

1. A high tensile strength steel material which is excellent weldability in high energy density heat source welding, comprising, by mass%:
0.0050-0.025% (inclusive of both 0.0050% and 0.025%) of C;
0.1-0.5% of Si (inclusive of both 0.1% and 0.5%);
2.5% or less of Mn;
0.003% or less of S;
0.05% or less ofAl;
0.0003-0.0040% of B (inclusive of both 0.0003% and 0.0040%);
0.0035% or less of N; and
the balance of Fe and unavoidable impurities,
wherein the high tensile strength steel material has a structure which contains, by presence ratio, 90% or more of ultra low carbon bainite and 5% or less of carbides.

2. A high tensile strength steel material which is excellent weldability in high energy density heat source welding of claim 1, wherein the high tensile strength steel material further comprises, by mass%, at least one element selected from a group consisting of:
0.05-2.0% (inclusive of both 0.05% and 2.0%) of Cu;
0.05-3.0% (inclusive of both 0.05% and 3.0%) of Ni;
1.0% or less of Cr;
1.0% or less of Mo;
0.08% or less of Nb;
0.08% or less of V;
0.1% or less of Ti.

3. A high tensile strength steel material which is excellent weldability in high energy density heat source welding of claim 1 or 2, wherein the high tensile strength steel material further comprises, by mass%, at least one element selected a group consisting of: 0.0005-0.0040% (inclusive of both 0.0005% and 0.0040%) of Ca; 0.0020-0.0080% (inclusive of both 0,0020% and 0.0080%) of REM.

4. A high tensile strength steel material which is excellent weldability in high energy density heat source welding of any of claims 1 to 3, wherein the content of C is 0.0050-0.020 mass% (inclusive of 0,0050% and exclusive of 0.020%).

5. A high tensile strength steel material which is excellent weldability in high energy density heat source welding of any of claims 1 to 4, wherein the content of B is 0.0010-0.0025 mass% (exclusive of 0.0010% and inclusive of 0.0025%).

6. A welded structure in which the high tensile strength steel material described in any of claims 1 to 5 is used and welded by high energy density heat source.

7. A welded structure of claim 6, wherein the high energy density heat source is electron beam.

8. A welded structure in which the high tensile strength steel material described in claim 1 is used and welded by high energy density heat source, the welded structure comprising:
a weld metal: and
a welding heat affected zone (HAZ),
wherein the weld metal and the HAZ each contain, by mass%:
0.0050-0.025% (inclusive of both 0.0050% and 0.025%) of C;
0.1-0.5% of Si (inclusive of both 0.1% and 0.5%);
2.5% or less of Mn;
0.003% or less of S;
0.05% or less of Al;
0.0003-0.0040% of B (inclusive of both 0.0003% and 0.0040%);
0.0035% or less of N; and
the balance of Fe and unavoidable impurities,
wherein the high tensile strength steel material has a structure which contains, by presence ratio, 90% or more of ultra low carbon bainite and 5% or less of carbides.

9. A welded structure in which the high tensile strength steel material described in claim 2 is used and welded by high energy density heat source, the welded structure comprising:
a weld metal: and
a welding heat affected zone (HAZ),
wherein the weld metal and the HAZ each contain, by mass%:
0.0050-0.025% (inclusive of both 0.0050% and 0.025%) of C;
0.1-0.5% of Si (inclusive of both 0.1% and 0.5%);
2.5% or less of Mn;
0.003% or less of S;
0.05% or less of Al;
0.0003-0.0040% of B (inclusive of both 0.0003% and 0.0040%);
0.0035% or less of N;
at least one element selected from a group consisting of: 0.05-2.0% (inclusive of both 0.05% and 2.0%) of Cu; 0.05-3.0% (inclusive of both 0.05% and 3.0%) of Ni; 1.0% or less of Cr; 1.0% or less of Mo; 0.08% or less of Nb; 0.08% or less of V; 0.1% or less of Ti; and
the balance of Fe and unavoidable impurities,
whrein the high tensile strength steel material has a structure which contains, by presence ratio, 90% or more of ultra low carbon bainite and 5% or less of carbides.

10. A welded structure in which the high tensile strength steel material described in claim 3 is used and welded by high energy density heat source, the welded structure comprising:
a weld metal: and
a welding heat affected zone (HAZ),
wherein the weld metal and the HAZ each contain, by mass%:
0.0050-0.025% (inclusive of both 0.0050% and 0.025%) of C;
0.1-0.5% of Si (inclusive of both 0.1% and 0.5%);
2.5% or less of Mn;
0.003% or less of S;
0.05% or less ofAl;
0.0003-0.0040% of B (inclusive of both 0.0003% and 0.0040%);
0.0035% or less of N;
at least one element selected from 0.0005-0.0040% (inclusive of both 0.0005% and 0.0040%) of Ca; 0.0020-0.0080% (inclusive of both 0.0020% and 0.0080%) of REM; and
the balance of Fe and unavoidable impurities,
wherein the high tensile strength steel material has a structure which contains, by presence ratio, 90% or more of ultra low carbon bainite and 5% or less of carbides.

11. A welded structure in which the high tensile strength steel material described in claim 3 is used and welded by high energy density heat source, the welded structure comprising:
a weld metal: and
a welding heat affected zone (HAZ),
wherein the weld metal and the HAZ each contain, by mass%:
0.0050-0.025% (inclusive of both 0.0050% and 0.025%) of C;
0.1-0.5% of Si (inclusive of both 0.1% and 0.5%);
2.5% or less of Mn;
0.003% or less of S;
0.05% or less ofAl;
0.0003-0.0040% of B (inclusive of both 0.0003% and 0.0040%);
0.0035% or less of N;
at least one element selected from a group consisting of: 0.05-2.0% (inclusive of both 0.05% and 2.0%) of Cu; 0.05-3.0% (inclusive of both 0.05% and 3.0%) of Ni; 1.0% or less of Cr; 1.0% or less of Mo; 0.08% or less of Nb; 0.08% or less of V; 1.0% or less of Ti;
further comprising at least one element selected from 0.0005-0.0040% (inclusive of both 0.0005% and 0.0040%) of Ca; 0.0020-0.0080% (inclusive of both 0.0020% and 0.0080%). of REM; and
the balance of Fe and unavoidable impurities,
wherein the high tensile strength steel material has a structure which contains, by presence ratio, 90% or more of ultra low carbon bainite and 5% or less of carbides.

12. A welded structure described in any of claims 8 to 11, wherein the content of C is 0.0050-0.020 mass% (inclusive of 0.0050% and exclusive of 0.020%).

13. A welded structure described in any of claims 8 to 12, wherein the content of B is 0.0010-0.0025 mass% (exclusive of 0.0010% and inclusive of 0.0025%).

14. A welded structure described in any of claims 8 to 13, wherein a tensile strength (TS) of a base material of the welded structure is 490 Mpa or more, a fracture appearance transition temperature is -110°C or less, and an absorbed energy (vE₋₃₀) of a welded metal and a HAZ is 250J or more.
